# EUROPEAN PATENT APPLICATION

(11) **EP 2 149 512 A2**
(43) Date of publication of application: **03.02.2010**
(21) Application number: 09166718.8
(22) Date of filing: 29.07.2009
(51) Int. Cl.: B65G 25/06

(54) **Conveyor slat/support beam assembly for reciprocating slat conveyor**

(30) Priority: 30.07.2008 US 221159
(71) Applicant: Keith Manufacturing Co., Oregon Madras OR 97741 (US)
(72) Inventor: Jackson, Daniel W., Redmond, OR 97756 (US); Drago, James P., Metolius, OR 97741 (US); Delamarter, Scott Michael, Madras, OR 97741 (US)
(74) Representative: D'Halleweyn, Nele Veerle Trees Gertrudis

(57) **Abstract**

Conveyor slats (14) are supported for longitudinal movement along support beams (12). The slats (14) are constructed from a structural plastic material and the support beams (12) are constructed from metal. The support beams (12) have a center portion in the form of an upwardly opening channel formed by side walls and a bottom wall. A top is formed by side parts. Side parts project laterally outwardly from the upper edges of the side walls. A top side part projects laterally outwardly from the upper edges of the side walls. The conveyor slats (14) have a top wall, a pair of side walls. Inwardly projecting flanges project laterally inwardly from the side walls. Outer side edges on the support beams (12) are positioned to contact shoulders on the flanges to prevent unwanted upward movement of the slats (14) off from the beams (12).

## Description

### Technical Field

This invention relates to improvements in reciprocating slat conveyors and, in particular, to the provision of slats constructed from plastic and support beam constructed from metal and to physical forms of both the slats and the support beams which result in a saving of both materials and installation labor.

### Background of the Invention

Reciprocating slat conveyors basically comprise elongated slats which are divided into sets and groups. A popular slat conveyor is composed of three sets and a number of groups which start on one side of the conveyor and extend across to the other side of the conveyor. Each group includes one slat from each set. That is, group I starts with a slat from a set one, followed by a slat from set two, followed by a slat from set three. This pattern is repeated across the width of the conveyor. All of the slats are driven together in a conveying direction for an interval of travel (the stroke length). At the end of travel, the slats are stopped and are then retracted to a start position, one set at a time. When all of the slats are back to a start position, the cycle is repeated. An example drive assembly is disclosed by U.S. Patent No. 4,793,469, granted December 27, 1988, to Raymond K. Foster. This patent presents a very comprehensive description of the operation of a drive mechanism and the way it moves the slats of the conveyor. The contents of U.S. Patent No. 4,793,469 is hereby incorporated herein by this specific reference.

U.S. Patent No. 5,447,322, granted September 5, 1995, to Raymond K. Foster, discloses a system of plastic conveyor slats and metal support beams for the slats.

German Patent Publication DE 3,731,612 A1, published September 19, 1987, and naming Albert Rappen as inventor, discloses a conveyor slat (Fig. 12) which may be constructed from plastic, and a support frame which may be constructed from metal.

U.S. Patent No. 5,301,798, granted April 12, 1994, to Arthur L. Wilkens, disclosed the use of plastic slats with plastic bearings on metal support beams.

An object of the present invention is to provide a reciprocating slat conveyor that is an improvement on all of the above-disclosed prior art conveyors. This application is related to U.S. Serial No. 11/823,914, filed June 30, 2007, and entitled RECIPROCATING SLAT CONVEYORS.

### Brief Summary of the Invention

The longitudinal support beams of the present invention have a horizontal bottom wall, a pair of laterally spaced apart vertical side walls extending upwardly from opposite sides of the bottom wall, and a top comprising horizontal side parts projecting laterally outwardly from the side walls. In some embodiments, side flaps are connected to the outer boundaries of the side walls. The side flaps extend outwardly and downwardly from the side parts and include lower edges. In other embodiments, the horizontal side parts of the top extend laterally outwardly to side edges.

An elongated plastic conveyor slat sits down on and is supported for movement by the support beam. The conveyor slat includes side portions having lower surfaces which contact upper surfaces of side parts of the top of the support beam. The conveyor slats also include a pair of side walls which extend downwardly from the sides of the slat, and further include laterally inwardly extending lower flanges on the side walls which present upwardly directed shoulders extending laterally inwardly from the side walls.

In the embodiment that includes the side flaps, the lower edges of the side flaps are positioned above the shoulders when the conveyor slat is on the support beam. The lower flanges on the side walls of the conveyor slat are adapted to contact the side flaps on the metal support beam, so as to allow the slat to be pushed downwardly to cause side flaps to bend inwardly and the lower flanges to move downwardly passed the lower edges of the side flap, whereupon the side flaps will spring outwardly into positions below the lower flanges.

In the embodiments without the side flaps, the outer edge portions of the side parts of the top of the support beam fit vertically between the shoulders on the lower flanges of the slat and the top of the slat immediately above the shoulders. The lower flanges may be adapted to spring outwardly when the slat is pushed downwardly on the support beam, causing the lower flanges to move downwardly passed the top of the support beam, and are adapted to spring back inwardly into a position below the side edge portions of the top of the support beam when the shoulder is below the side edges.

Other more detailed features are described in the description of the illustrated embodiments and are particularly pointed out in the appended claims.

### Brief Description of the Several Views of the Drawings

Like reference numerals refer to like parts throughout the several views of the drawing, and:
Fig. 1 is a fragmentary pictorial view of a first embodiment of the invention, said view being taken from above and looking towards the top, one end and one side of selected components of a reciprocating slat conveyor;
Fig. 2 is an exploded pictorial view of the assembly shown by Fig. 1, but showing all but one of the components in an assembled condition;
Fig. 3 is a view like Fig. 1 of a second embodiment of the invention;
Fig. 4 is a view like Fig. 2, but of the embodiment shown by Fig. 3;
Fig. 5 is a view like Fig. 3, but of a third embodiment of the invention;
Fig. 6 is a view like Figs. 2 and 4, but of the embodiment shown by Fig. 3;
Fig. 7 is an end view looking towards the support beams and the conveyor slats in the first embodiment;
Fig. 8 is a view like Fig. 7, but of the second embodiment; and
Fig. 9 is a view like Fig. 7 and 8 but of the third embodiment of the invention.

### Detailed Description of the Illustrated Embodiment

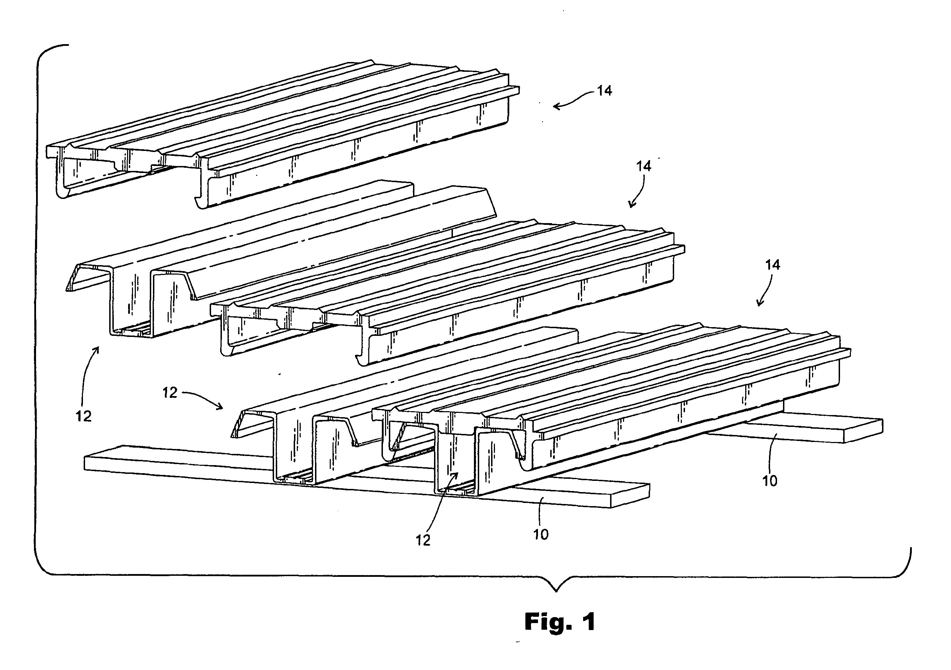

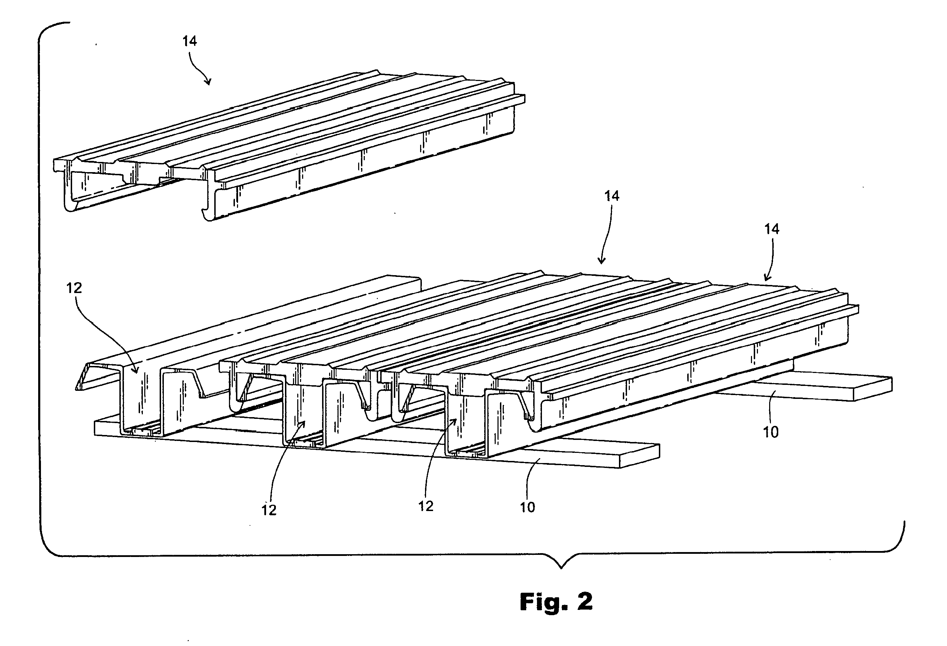

The embodiment shown by Figs. 1, 2 and 7 comprises a plurality of longitudinally spaced apart transverse frame members 10 that are parts of a substructure. A plurality of longitudinally extending, side-by-side support beams 12 are connected to the members 10. Each support beam 12 extends the full length of the conveyor, as a single member or sections, and supports an elongated conveyor slat 14 for back-and-forth movement lengthwise of the support beam 12. In a typical conveyor, the length of the conveyor slats 14 and the support beams 12 may be between twenty-four and forty feet. The conveyor may typically be twenty-four slats wide, divided into three sets of eight slats per set. The slats 14 are arranged laterally across the conveyor. There is first a slat 14 from the first set. Then, a slat 14 from the second set. Then, a slat 14 from the third set. This pattern is repeated all the way across the conveyor. As is well known, in use, this type of slat conveyor is operated to move all of the slats 14 together in a conveying direction for a stroke length of ten inches to twelve inches, for example. As the slats 14 move, they move with them the load that is on the slats 14. At the end of the stroke, the slats 14 are retracted, one set at a time. That is, set one is retracted to a start position while sets two and three are stationary. Then, set two is retracted to a start position while sets one and three are stationary. Then, set three is retracted to a start position while sets one and two are stationary. Then, all of the slats 14 are moved again in the conveying direction for another stroke length. This pattern of operation is repeated until material on the conveyor is either loaded or unloaded, depending on the direction of operation. As stated above, when one set of the conveyor slats 14 is retracting, the other two sets are stationary below the load. The stationary slats present twice as much area to the load as the retracting slats. As a result, the stationary slats hold the load against moving backwards with the retracting set of slats.

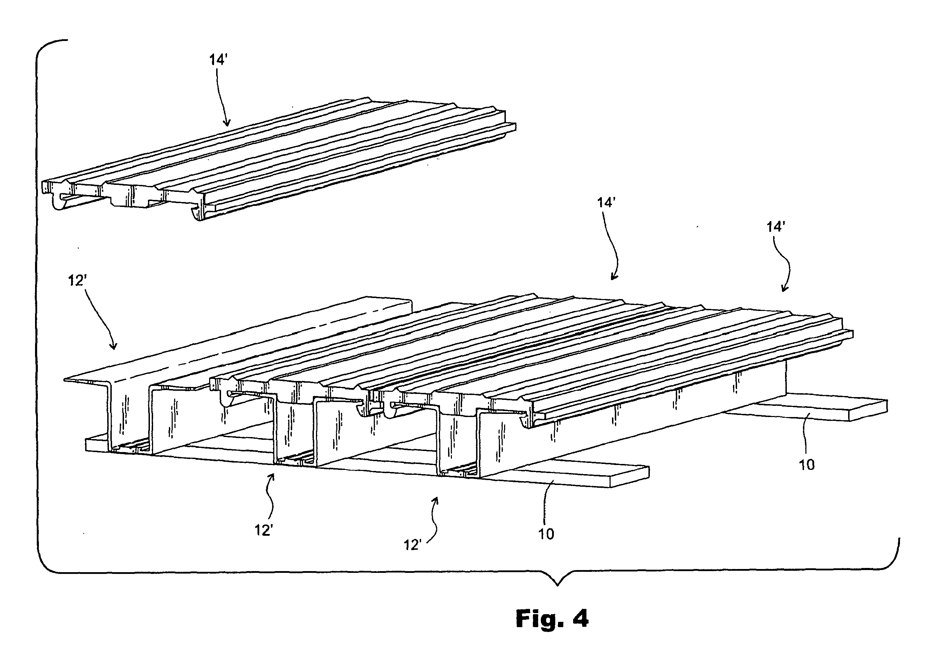

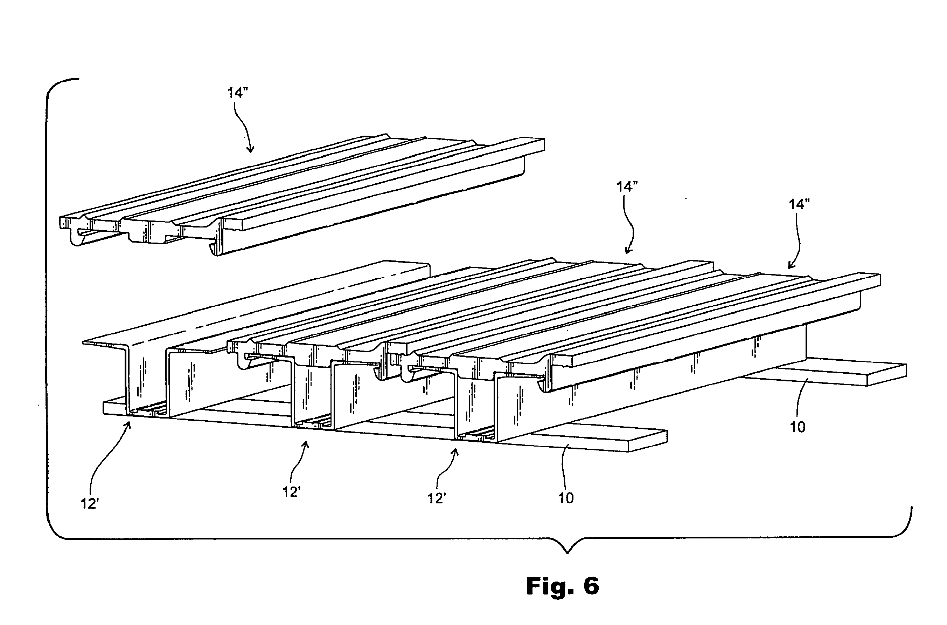

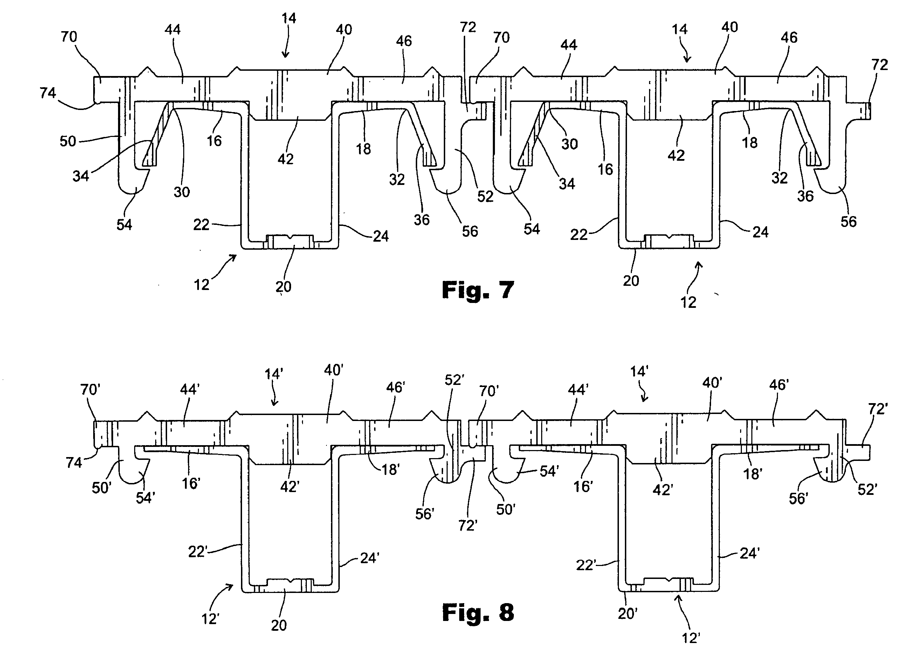

The transverse frame members 10 are shown in the form of flat bars. However, they will most likely be I-beams or channel beams. The support beams 12 are in the form of upwardly opening channels having relatively wide flanges 16, 18 extending at opposite directions at the tops of the beams 12. For example, see U.S. Patent No. 4,793,469. Each channel is formed by a bottom 20 and sides 22, 24 which extend upwardly from the side boundaries of the bottom 20. Sides 22, 24 are spaced apart and are parallel to each other and are perpendicular to the bottom. The flanges 16, 18 form side parts of a top. These side parts 16, 18 are connected to upper boundaries of the sides 22, 24. Side part 16 extends substantially perpendicular to side 22 and side part 18 extends substantially perpendicular to side 24. Corners are formed where side part 16 meets side 22 and where side part 18 meets side 24. Parts 16, 22 are connected together at corner 26 and parts 18, 24 are connected together at corner 28. Preferably, parts 16, 18 are thicker at the corners 26, 28 and they gradually become thinner as they extend outwardly to their respective outside edges 30, 32. Referring to Fig. 7, at these edges, 30, 32, they connect with outwardly and downwardly extending wings 34, 36. Preferably, the bottom 20 is thickened at its center. The support beams 12 are preferably connected to the sub frame beams 10 by fasteners that extend through the thickened region and into the frame members 10. The central portion of the support beams is open at the upper end of the channel. This allows insertion of the fasteners downwardly to the bottom 20 and also permits the use of an installation tool that inserted downwardly into this open space 30. For example, see Figs. 4 - 8 of U.S. Patent No. 5,996,772, granted December 7, 1999, to Raymond Keith Foster.

Referring to Fig. 7, the slat 14 is shown to include a top 40 having a central part 42 that extends downwardly into the space that is exposed between the upper portions of side walls 22, 24. The part 42 extends longitudinally of the slat 14 and is free to slide longitudinally of the beam 12 during movement of the slat 14. The top 40 of the slat 14 has opposite side parts 44, 46 which extend laterally outwardly in opposite directions from lower central portion 42. The parts 44, 46 are side parts of the top 40. They have lower surfaces that contact the upper surfaces of the flanges 16, 18. During slat movement, the slat parts 44, 46 slide longitudinally on the flanges 16, 18 and the slat part 42 slides longitudinally of the space that it is in defined between the upper edges of the sides 22, 24.

Slats 14 include opposite side walls 50, 52 which extend vertically downwardly from the edges of the slat 14. The lower edges of the side walls 50, 52 include laterally inwardly projecting flanges 54, 56. Flange 54 includes an upper shoulder surface that extends laterally inwardly from side wall 50. Flange 56 includes an upper shoulder surface that extends laterally inwardly from side wall 52. As clearly shown by Fig. 7, the inside portions of the flanges 54, 56, below the shoulders, slope downwardly and outwardly and the bottoms of the flanges 54, 56 are rounded. This enables a slat 14 to be set down onto the support beam 12, with the flanges 54, 56 on the wings 34, 36. Initially, a full downward movement of the slat 14 is prevented by the contact between the flanges 54, 56 and the wings 34, 36. However, in response to the slat 14 being pushed downwardly, the inside surfaces of the flanges 54, 56 will slide along the outside surfaces of the wings 34, 36 and will force the wings laterally inwardly until the flanges 54, 56 have moved passed the lower edges of the wings 34, 36. When this happens, the spring energy in the wings 34, 36 will move the wings 34, 36 back outwardly into their normal, unstressed positions. When this happens, the shoulders on the flanges 54, 56 will be positioned below the lower edges of the wings 34, 36. In this position, unwanted upward movement of the slats 14 off from the beams 12 would be prevented by the lower edges of the wings 34, 36. As upward movement would tend to happen, the shoulders on the flanges 54, 56 would contact the lower edges of the wings 34, 36 and the upward movement of the slat 14 would be prevented.

In the embodiment shown by Fig. 7, the side part of the top 40 that is adjacent side wall 50 projects laterally outwardly from the slat 14 beyond the side wall 50. This projection is in the nature of a flange 70 having a lower surface that is substantially at the same level of the lower surface of top 40 that sits down on the side parts 16, 18 of the top of the support beam 12. The opposite side of the slat 14 includes the laterally outwardly projecting flange 72 that projects laterally outwardly from side wall 42. It has an upper surface that is substantially at the same level as the lower surface of flange 70. Referring to Fig. 7, the slat 14 that is on the left side of the view is installed first. Then, the slat 14 shown on the right side of the view is installed in the same manner. Its side flange 70 moves downwardly into a position on flange 72 of the slat 14 shown on the left. In preferred form, a longitudinal bead 74 is formed on the flange 70. When the slats 14 are installed, each bead 74 makes a line contact with the upper surface of a flange 72. This creates a very effective pressure seal between the two flanges 70, 72.

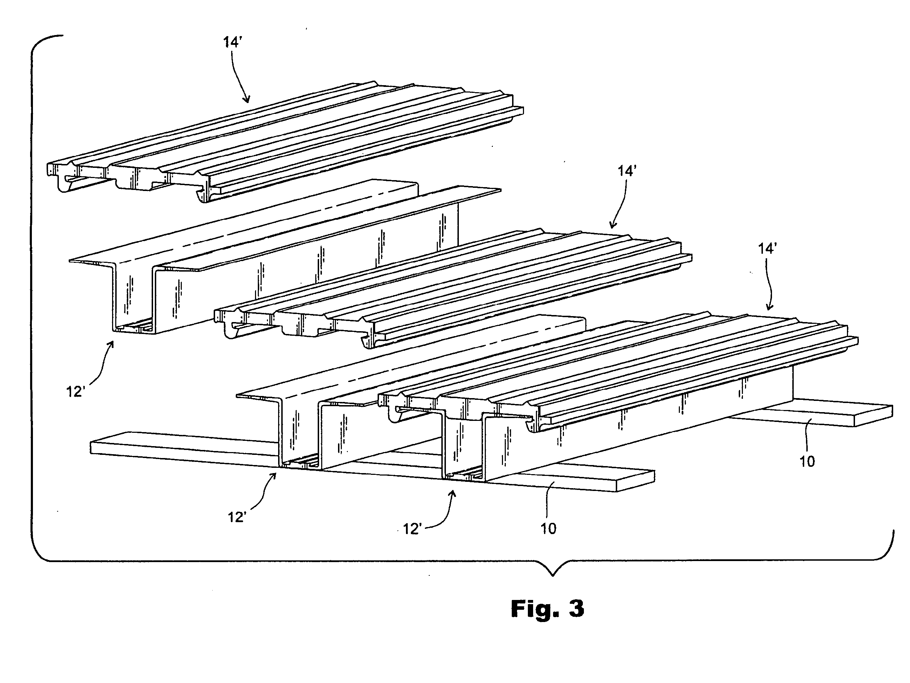

Referring to Figs. 3, 4 and 8, in this embodiment, the support beams 12' do not include wings. Rather, the side parts 16', 18' of the top of the beam 12' extend further outwardly into positions above the shoulders on the flanges 54', 56'. In this embodiment, the side walls 50', 52' are shorter and the shoulders on the flanges 54', 56' are much closer to the lower surface of the slat 14'. When the slats 14' are installed, the outer edge portions of the top parts 16', 18' are positioned between the shoulders on the flanges 54', 56' and the lower surface of the slat 14' that is vertically above the shoulders. In this embodiment, the slats 14' can be installed by sliding them endwise onto the side parts 16', 18' or, the slat 14' can be snapped down from above. When the slats 14' are set down onto the guide beams 12', the inner side surfaces of the flange 54', 56' will make contact with the outer edge portions of the top parts 16', 18'. In response to a downward force imposed on the slat 14', the flanges 54', 56' will be cammed outwardly to allow the outer edge portions of the top parts 16', 18' to move passed the flanges 54', 56', into a position above the shoulders, shown by Fig. 8. In the embodiments shown by Figs. 3, 4 and 8, the slats 14' have flanges 70', 72' which function in the same manner as the flanges 70', 72' in the embodiment of Figs. 1, 2 and 7. Flanges 70' may include a rib 74' on its lower surface positioned to contact the upper surface of flange 72' on the adjacent slat.

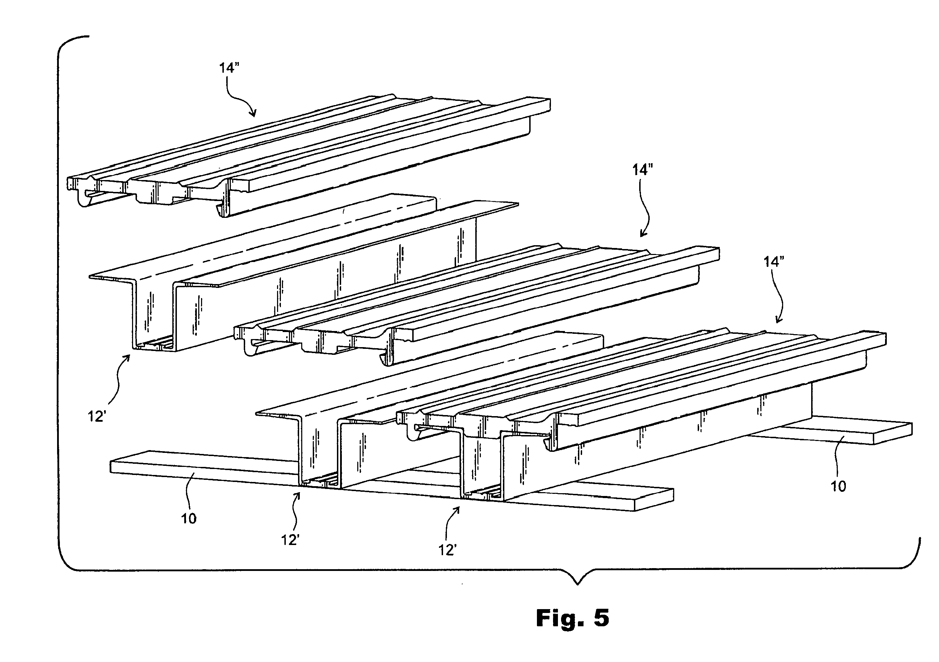

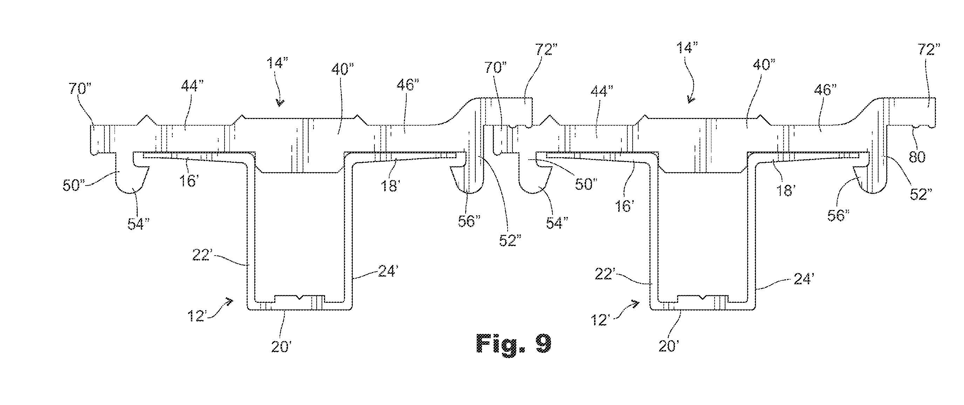

Referring to Figs. 5, 6 and 9, there is shown an embodiment of the invention which includes support beams 12' like those illustrated in Figs. 3, 4 and 8, and a floor slat 14' that differs from slat 14' with respect to the location of the flange 72" and its relationship to a flange 70" on an adjacent slat. In Fig. 9, the flange 72' is shown to extend first upwardly and then laterally outwardly from its side of the slat 14". Its lower surface is substantially at the same level as the upper surface of the slat 70". In this embodiment, the slat 14" on the right is installed first. Then, the slat 14" on the left is installed. The installation of the slat 14" on the left moves the flange 72" downwardly into contact with the upper surface of the flange 70" on the slat 14" shown on the right in Fig. 9. The flanges 72" are preferably provided with one or more longitudinal beads 80 that are positioned to set down onto the upper surface of an adjoining flange 70" when the slats 14" are installed.

The slats 14, 14', 14" are constructed from a suitable structural plastic material. Example materials are polyurethane and UHMW. Additional embodiments may be like the embodiment shown by Figs. 3 - 6, 8 and 9, but without the lower longitudinal projection 42. That is, the bottom of the top 40', 40" may be at a constant level from one side of the slat to the other.

The illustrated embodiments are only examples of the present invention and, therefore, are non-limitive. It is to be understood that many changes in the particular structure, material and features of the invention may be made without departing from the spirit and scope of the invention. Therefore, it is our intention that our patent rights not be limited by the particular embodiments that are illustrated and described herein, but rather are to be determined by the following claims, interpreted according to accepted doctrines of patent claim interpretation.

## Claims

1. A conveyor slat/support beam assembly, comprising:
an elongated metal support beam (12) having a horizontal bottom wall (20), a pair of laterally spaced apart vertical side walls (22, 24) extending upwardly from opposite sides of the bottom wall, a top comprising horizontal side parts (16, 18) projecting laterally outwardly from the side walls, and side flaps (34, 36) extending outwardly and downwardly from connections with the side parts, said side flaps including lower edges;
an elongated plastic conveyor slat (14) including side portions (44, 46) having lower surfaces which set down on the side parts (16, 18) of the top of the support beam, a pair of side walls (50, 52) which extend downwardly from the side portions of the slat, and laterally inwardly from the side walls (22, 24) forming shoulders; and
wherein the lower edges of the side flaps (34, 36) are positioned above the shoulders when the conveyor slat is on the support beam.

2. The conveyor slat/support beam assembly according to claim 1, wherein the conveyor slat includes an elongated lower central portion which fits into the support beam, between the vertical side walls of the support beam.

3. The conveyor slat/support beam assembly of claim 1 or 2, wherein the lower flanges on the side walls of the conveyor slat are adapted to contact the side flaps on the metal support beam and bend them inwardly, so as to allow the slat to be pushed downwardly and the lower flanges to move downwardly past the lower edges of the side flaps, whereupon the side flaps will spring outwardly into positions above the lower flanges.

4. The conveyor slat/support beam assembly of any of the previous claims, wherein the conveyor slat includes a first edge portion (70) on a first side of the conveyor slats that has downwardly directed bearing surface, and a second edge portion (72) on the second side of the conveyor slat which has an upwardly directed bearing surface that is a substantially the same height as the first bearing surface.

5. Conveyor slat/support beam assembly, comprising:
an elongated metal support beam (12') having a horizontal bottom wall (20'), a pair of laterally spaced apart, the vertical side walls (22', 24) extending upwardly from opposite side boundaries of the bottom wall, a top comprising horizontal side parts (16', 18') projecting laterally outwardly from upper boundaries of the side walls, said side parts having outer edges;
an elongated plastic conveyor slat (14'); (14") including a top with side portions (44', 46'); (44", 46") having lower surfaces which sit down on the side parts (16', 18') of the top of the support beam, a pair of side walls (50', 52'); (50", 52") which extend downwardly from the side portions of the top, and lower flanges (54', 56'); (54", 56") on the side walls which present shoulder extending laterally and inwardly from the side walls (50', 52'); (50", 52"); and
wherein the outer edges of the side parts (16', 18') of the top of the support beam are positioned above the shoulders when the conveyor slat is on the support beam.

6. The conveyor slat/support beam assembly according to claim 5, wherein the conveyor slat includes an elongated lower central portion which fits into the support beam, between the vertical side walls of the support beam.

7. The conveyor slat/support beam assembly of claim 5 or 6, wherein the lower flanges on the side wall of the conveyors slat are adapted to spring outwardly in response to a downward movement of the conveyor slat onto the support beam, and then spring inwardly after the lower flanges are below the outer edges of the side part to the top of the support beam.

8. The conveyor slat/support beam assembly of claim 6 or 7, wherein the conveyor slat includes a first edge portion (70') on a first side of the conveyor slats that has a downwardly directed bearing surface, and second edge portion (72') on the second side of the conveyor slat which has an upwardly directed bearing surface that is a substantially the same height as the first bearing surface.

9. The conveyor slat/support beam assembly of claim 6 or 7, wherein a first side edge portion (70") of the conveyor slat has an upper surface that is a part of the top of the conveyor slat and a second side edge portion (72") is elevated above the conveyor slat and has a lower surface that is substantially at the same level as the upper surface of the first side edge portion.
